# EUROPEAN PATENT SPECIFICATION

(11) **EP 2 996 859 B1**
(45) Date of publication and mention of the grant of the patent: **31.05.2017**
(21) Application number: 14723128.6
(22) Date of filing: 18.04.2014
(51) Int. Cl.: B29C 47/02, B32B 3/02, B32B 3/12

(54) **PROCESS AND APPARATUS FOR BORDERING A CORRUGATED PLASTIC PANEL AND PANEL THUS OBTAINED**
VERFAHREN UND VORRICHTUNG ZUR EINFASSUNG EINER GEWELLTEN KUNSTSTOFFTAFEL UND DADURCH ERHALTENE PLATTE
PROCÉDÉ ET APPAREIL PERMETTANT DE BORDER UN PANNEAU PLASTIQUE ONDULÉ, ET PANNEAU AINSI OBTENU

(30) Priority: 17.05.2013 IT PN20130027
(43) Date of publication of application: 23.03.2016
(73) Proprietor: K-Holding S.p.A., 33077 Sacile (PN) (IT)
(72) Inventor: BRESSAN, Franco, I-33077 Sacile (PN) (IT); DE NARDI, Mirco, I-33077 Sacile (PN) (IT)
(74) Representative: Giugni, Diego
(86) International application number: PCT/IB2014/060836
(87) International publication number: WO 2014/184692

(56) References cited:
- EP-A2- 1 574 264
- WO-A1-01/19603
- WO-A1-2009/112259
- WO-A1-2010/143310
- DE-A1- 3 601 255
- DE-A1-102005 056 079

## Description

### TECHNICAL FIELD OF THE INVENTION

The present invention is related to a process for bordering a corrugated plastic panel and to a panel obtained by means of such process. In particular, the invention is related to a process for the production of a corrugated plastic material panel comprising a bordering made in-line or off-line in order to close the openings towards the exterior. The invention is also related to an apparatus for bordering according to such process.

### PRIOR ART TECHNIQUE

In the packaging sector, plywood is a material still used nowadays as a separator in the pallet, while cardboard is used to separate single items. However, both these materials have a limited use because of their easy deterioration. In fact, both the plywood fibers and those of the cardboard tend to easily deteriorate when exposed to environmental conditions such as humidity, wind, rain or sun. Moreover, such materials are likewise easily contaminated because they are subject to dirt, fungi spores, and bacteria. As a result they are not well accepted especially in the sector of foodstuffs.

These inconveniences are overcome by the use of honeycomb or corrugated plastic panels as they have a very good resistance compared to their reduced weight, greater insulating properties and production inexpensiveness. In general, corrugated panels can be produced from thermoplastic polyolefin which gives, besides the above said advantages, also waterproof qualities and resistance to chemical agents. Further, they can economically be recycled and reused in the same packaging sector such as retaining flaps and interlayers or for separating items, or containers in general, boxes, molded panels, car interior components, walls, supports in general and other similar applications.

Typically corrugated plastic panels comprise a couple of thermoplastic sheets parallel and connected one to the other by means of longitudinal beams. The beams, then, form corrugations or divided longitudinal spaces which cover the whole length or width of the panel. Therefore, the panels are open along one or more of its borders, according to the profile and dimension of the corrugations.

The openings are a problem as they let in dust, dirt and liquids that accumulate in the corrugations. Further, the opening borders are rough and sharp so they can cause scratches to the user or tears to clothes. It is therefore necessary to close the openings, on the one hand, in order to prevent the dirt and liquid entrance and accumulation and on the other hand to avoid sharp borders.

To such purpose, there are mainly two ways to seal the perimetric borders of corrugated plastic panels. The first one consists in gluing a strip of the identical plastic material or similar to the one forming the panel on the profile delimiting the open corrugation. However, this process is rather complex because it is necessary to have a strip whereon some glue must be put and to have an adhering system for the strip thus prepared on the open corrugation. Further, the strip hold is rather low. The second way, more common, consists in heating the two parallel layers which make up the panel, in bending them in a reciprocal approach so as to put the respective free borders into contact and seal them. This process, though simpler and more efficient than the first one, requires the use of rather complex apparatuses. Moreover, the sealed border does not ensure a good shock resistance and, consequently, it is subject to easy breaking and to the same previously highlighted problems concerning open borders. A variation to that process consists in folding one of the two layers onto the other in order to increase the shock resistance and cover the border obtained in this way with a further layer of polymeric material or other bordering material. However, it is clear that such variation is particularly complex and expensive both for the process and for the finished product.

EP1574264 discloses a light-weight composite sheet, such as a honeycomb core between solid outer layers, fitted with a solid outer edge by applying, e.g. by means of an extruder, a free-flowing material, that partially penetrates the hollow spaces of the core. The material is then smoothed (30), optionally assisted by applying a low pressure, and cooled to harden it.

WO2010/143310 discloses a process wherein while a first coating gun is being moved along a peripheral edge portion of one surface of a multilayer glass panel horizontally placed on a first worktable, the first coating gun discharges a molding material to coat the peripheral edge portion with the molding material over its entire length, molding a glazing gasket thereon. An inverting mechanism inverts the multilayer glass panel with the molded glazing gasket such that the other surface of the multilayer glass panel faces upwardly. Then, a second coating gun is moved along a peripheral edge portion of the other surface of the multilayer glass panel, which is horizontally placed on a second worktable, and simultaneously discharges a molding material to coat the peripheral edge portion with the molding material over its entire length, molding a glazing gasket thereon.

WO2009/112259 discloses a process wherein edging strips for honeycomb structures are foamable and cart be softened and foamed in contact with the edge of the honeycomb structure to bond to the honeycomb. A convenient in situ heating system is also provided comprising a, U or C shaped heater which can be placed around the edge of the honeycomb structure carrying the edging material and activated to bond the edging material to the honeycomb structure.

### SUMMARY OF THE INVENTION

The problem at the base of the present invention is that of providing a process for bordering a plastic corrugated panel which is simple and efficient so as to obtain a sealed panel and resistant at the borders.

Such problem is solved by means of a process comprising a step for sealing the open corrugations in correspondence with the borders through a single operation which allows to make a smooth and shock absorbing border.

Therefore a first object of the present invention is that of providing a bordering process of a corrugated plastic panel through material laying.

A second object is a corrugated thermoplastic panel sealed along its perimetric border through smooth and shockproof sealing.

A third object is a sealed corrugated thermoplastic panel and with a shaped or finished border.

A fourth object is that of providing a shaped elastic joint, with a hinge effect, between two thermoplastic panels or the union between two borders of the same sheet, in this case in order to close, seal the sheet onto itself.

A further object of the invention is an apparatus for bordering said corrugated thermoplastic panel so as to seal it.

Another further object is a plant for making a corrugated thermoplastic panel comprising said bordering apparatus.

### BRIEF DESCRIPTION OF FIGURES

Further characteristics and advantages of the process, panel and apparatus of the invention will become more apparent from the following description of a form of embodiment given for exemplification only but not limited to, with reference to the following figures, wherein:
- figure 1 shows a schematic axonometric view of an apparatus for bordering a corrugated thermoplastic panel;
- figures 2A-2F show a view of a particular of the apparatus of figure 1 in different operating steps;
- figure 3 shows an axonometric view of a thermoplastic panel bordered according to the present invention;
- figure 4 shows a sectional side view along line IV-IV of the panel of figure 3 and an enlarged particular;
- figure 5 shows a first example of use of the panel according to the invention;
- figure 6 shows a second example of use of the panel according to the invention;
- figure 7 shows an axonometric view of a group of assembled panels according to the invention;
- figure 8 shows a sectional side view along line VIII-VIII of the group of panels of figure 8 disassembled;
- figure 9 shows a schematic axonometric view of a variation of the apparatus of figure 1.

### DETAILED DESCRIPTION OF THE INVENTION

The idea at the base of the present invention is that of making a corrugated panel whose borders are sealed by means of the laying of a material selected in order to ensure from one hand the tightness against dirt and liquids and from the other resistance to shocks.

Based on numerous experimental tests it has been observed that the laying of the material has to be carried out through a process and an apparatus having well determined working parameters.

In particular, the process for bordering a corrugated plastic panel according to the invention comprises the following steps in succession:
a) providing a corrugated plastic panel having at least on open border;
b) heating a thermoplastic elastomeric material till its fusion point;
c) heating at least a portion of said border;
d) extruding said fused thermoplastic elastomeric material;
e) laying said fused material by means of an extrusion die in correspondence of at least said portion of said heated border, wherein the laying step is carried out with at least an angle comprised between 4° and 45° with respect to the tangent to the laying point.

It is to keep in mind that in the present description terms such as "horizontal", "vertical" are referred to the position and orientation that the devices of an apparatus for bordering panels normally have, that is position and orientation when in use. Similarly, the steps for the bordering process can have generic reference terms which anyway are to be meant as related to the normal realization conditions of the process. Similarly, the term "high resistance" to abrasion and to chemical agents is referred to values which usually identify a resistance to a high number of cycles or long duration, as known by the skilled in the field.

Step a) providing a corrugated plastic panel consists in supplying traditional corrugated plastic panels, preferably polypropylene of various longitudinal, cross and thickness dimensions. For example, panels can have a thickness of 3-5 mm with basic weights between 400 and 1500 gr/m², or between 7 and 20 mm with basic weights between 1500 and 4000 gr/m² and of standard dimensions for the packaging sector, such as 1200x1000mm, 1200x800 mm, 1418x1120mm.

Step b) consists in heating a thermoplastic material till its fusion point. Depending on the desired properties, it is used: thermoplastic elastomeric materials (TPE) among which thermoplastic polyolefin (TPO), thermoplastic styrene (TPS), or polyolefin plastics, in the specific case the same as that of the corrugated panel, polypropylene, high density polyethylene, polycarbonate. In particular, the selected materials are compounds of polyolefins, thermoplastic elastomers of styrene origin (TPS such as SBS, SEBS) or of polyolefin origin (TPE, TPO), which can be filled with mineral fillers or glass fibers to increase the resistance properties and stability. Preferably, the above mentioned filler material is an open-cell or more preferably closed-cell foamed material. The fusion temperatures of the above said materials are known to the skilled in the field and anyway they are comprised between 120-240°C.

Step c) takes place heating at least the portion of the border of the panel in correspondence of the laying point of the fused elastomeric material to such a temperature so as to make the border to be sealed malleable, that is capable to prepare the contact surface with the material in order to obtain a fusion seal of the two materials. In other words, the contact surface must be capable of melding with the filler material without forming tensions or swellings. To this purpose, the temperature is preferably comprised between 120° and 180°C. The heating is preferably carried out by means of a hot air jet.

The extrusion step d) preferably occurs at a pressure so as not to compromise the integrity of the employed polymer and sufficient in order to ensure a constant quantity of the material feeding the pump. This pressure is comprised between 30 bars and 80 bars, preferably between 50 bars and 80 bars.

The next step e) that is laying said extruded material is carried out with the lowest possible inclination; it is preferable not to exceed 45°with respect to the tangent of the point where the laying takes place in order to avoid problems connected to the flow and deposit of the filler material.

Preferably, the process also comprises a step of blocking the fluid material flow in correspondence of the nozzle or die. Advantageously, this step makes it possible to avoid burrs and ravels of the material when the process is not carried out in a continuous way.

Preferably, the process also comprises a transport step of the material from the extrusion to the injection. The transport step can occur through the contemporary heating of the material so as to keep it in a fluid state.

The just described operating steps are carried out by selecting well defined operating parameters so as to obtain the best fluidity for the laying of the above said thermoplastic elastomeric material. In fact, the fluidity has to be calibrated according to the material chosen among those previously specified, both in order to allow an easy injection without any discontinuities caused, for example, by clots or clogging of the die or nozzle, and prevent the too fluid material from dripping once laid. Anyway, such adjustments are easy for the skilled in the field that will make the normal calibrations so as to set the precise operating parameters within the above said intervals for each material.

The process can further comprise a final cooling and shaping step of the border. The cooling can be carried out through a thermoregulated die, air blowing and the shaping through cooled calibration or on cooled and shaped calibrators or on shaped and cooled rollers.

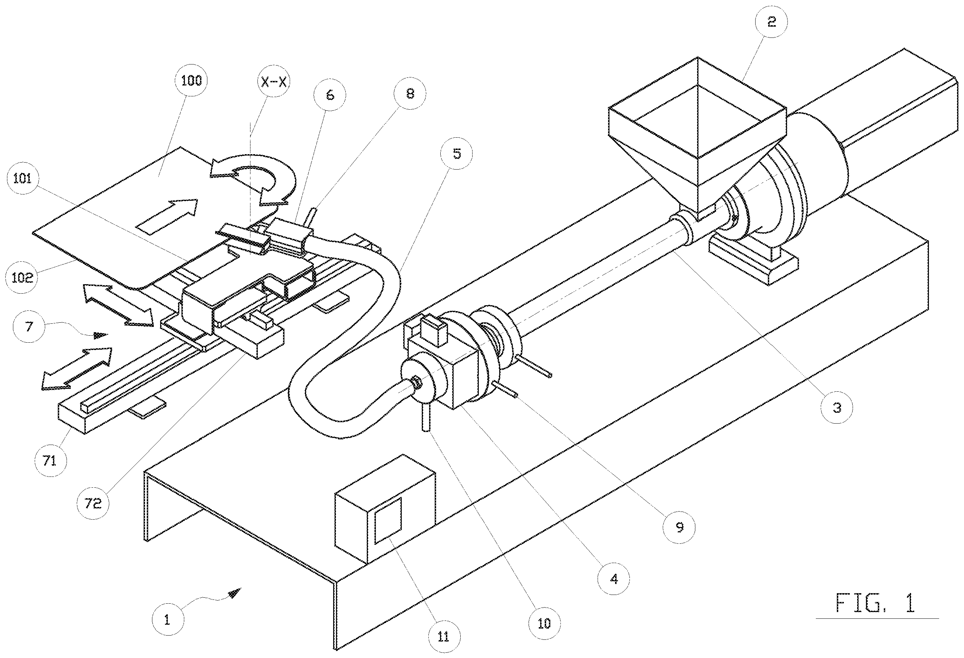

The just described process is preferably carried out by means of an apparatus as shown in figure 1. The apparatus, generally referred to as number 1, comprises a charging hopper 2 of the thermoplastic elastomeric material, an extruder 3, a metering pump 4, downstream the extruder, a flexible conduit 5, to transport the thermoplastic elastomeric material exiting the extruder, a die or a laying or injection nozzle of the thermoplastic elastomeric material 6, a moving system 7 of the die and a moving system of a corrugated panel to be sealed.

The hopper 2 is charged with the thermoplastic elastomeric material in the form of pellets. From the hopper the pellet falls into the feed portion of the extruder where it can be heated. Subsequently, the material goes into the extruder 3 which is made of a traditional cylinder inside which a worm screw presses the material. Thus, inside it, it occurs the transformation of the pellet from a solid state into a fused state due to the temperature and to the mechanical action of the compression and of the shearing stresses transmitted by the extrusion screw. Preferably, downstream the extruder, before the metering pump 4, there can be placed a pressure probe 9 apt at detecting the pressure entering the metering pump.

The metering pump 4, mounted at the end of the extruder 3, receives the fluid material and releases the amount necessary to continuously feed the die 6 depending on the characteristics of the border to be sealed, for example its thickness and therefore the space to be filled.

Preferably, after the pump and before the flexible conduit, there is a further probe 10 to detect the exit pressure of the same pump.

From the metering pump 4 it departs the flexible conduit 5 which transfers the fluid material to the die 6. The conduit must be flexible as it is connected to a moving die, as later described in detail. In particular, the conduit 5 must bear remarkable pressures, up to 150 bars, and temperatures up to 250°C. Consequently, it is made of a material with a high abrasion resistance and a high chemical resistance to all chemical substances, including acids and alkaline solutions of any concentration.

In particular, the flexible conduit is made of a PTFE smooth pipe intertwined with two layers of stainless steel wire, (1.4301) max., operating temperature of 250°C and operating pressure up to 200 bars. Preferably, the conduit is equipped with heating elements. Moreover, the conduit is insulated by means of an insulating material, of the traditional kind, in order to prevent heat dispersion along the route from the pump to the die.

Preferably, a sensor 8 is mounted on the die 6 to detect the fluid pressure therein.

Then, it is provided a command and control unit 11 to regulate the pressure detected by the previously described probes.

The die 6 is made of a nozzle of any kind, or groups of nozzles or a plate provided with one or more holes calibrated so as to allow the desired profiling of the corrugated panel. Consequently, the die will be adapted according to the thickness and the shape of the border to be sealed.

In particular, in the case of the discontinuous process, the die 6 is mounted on a moving system 7 apt at moving the die along the open border of a panel so that it can always place itself, following its profile, with the same above said angle. The system 7 comprises respectively first 71 and second 72 guides or rails apt at moving the die 6 along respectively a first and second direction orthogonal to each other and laying on a horizontal plane. Further, the die is mounted in rotation on an orthogonal axis X-X, that is vertical, with respect to said first 71 and second 72 guides (figure 1). The moving system is also provided with sensors (not shown) apt at reading the die position with respect to the border profile so as to send a proximity signal to a command and control unit (not shown) of the movement of the same die.

It is to keep in mind that the movement of the die occurs according to predefined parameters loaded on a command and control unit (not shown) depending on the type of the panel to be sealed. In other words, the positioning and movement of the die 6 is carried out by means of the instructions sent to the command and control unit. The instructions are spatial coordinates stored in the command and control unit based on different types of panels.

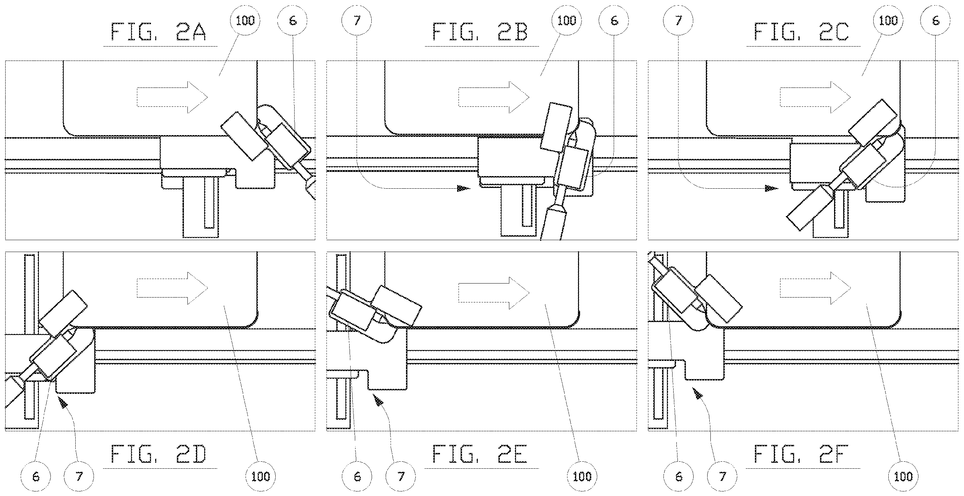

In figure 2A, it is shown a starting point of the laying step e) wherein the die 6 is in correspondence of a rounded corner of a panel 100 to be sealed. As previously described, once the program containing the instructions for a particular panel has been set (profile contour identified through the special coordinates, thickness, length of the sides and of the rounded corners), the moving system 7 is activated so as to follow the border profile of the panel 100 always keeping the correct angle of the die.

Therefore, with the die movement, as shown in figures from 2B to 2F, the system is capable of following, in a very precise way, the entire profile of the panel so as to place the die in the correct position at every moment and to allow the laying of the filler material to seal the openings.

The panel movement is carried out through continuous belt or chain or roller haul-off, in particular in the case of the continuous process the continuous sheet is moved by means of roller haul-offs. The movement of the sheet must be, both in the continuous and discontinuous cases, constant and synchronized with the laying speed and in the discontinuous case with the tracking system of the die. In this case, the sealing first occurs on two sides of the panel in the extrusion line or by means of a first transit in order to seal two or three adjacent sides, and two borders by means of the moving system previously described with reference to figures 2A-2F. Then the sheet is turned by 180° and the other two adjacent sides or the remaining side are bordered with the respective borders.

Preferably, the die or nozzle 6 comprises a gate with a needle valve of the conventional type. In particular, the blocking of the canal occurs by means of a needle operated by a pneumatic piston: when the needle is pushed towards the nozzle or the exit channel of the material, it forms a conical seal with the channel walls blocking the flow, when it is lifted, the seal opens letting the material flow (not shown).

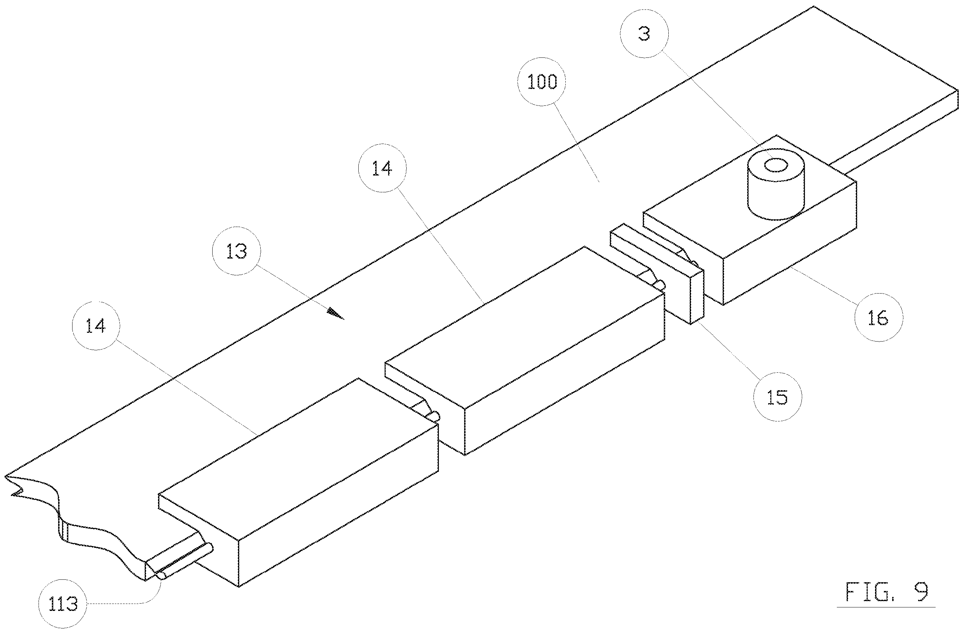

Preferably, moreover, the apparatus comprises a cooling-calibration group 13, as shown in figure 9. The calibration group, placed as close as possible to the die or nozzle is a counter mold of the profile to be made. The counter mold 14, or mold, is cooled, or better thermoregulated, by means of a command and control unit (not shown), and can also operate in a vacuum so that the extruded material can perfectly adhere to the calibrator and can cool down in a controlled way. In the simplest forms the counter mold 14 is formed by a series of rollers shaped as the resulting border, they too cooled down. Preferably, in order to ensure the entering into the cooling calibration group some air is insufflated by means of, for example, a traditional air knife nozzle 15 (schematically shown in figure 9) having the function of lowering the surface temperature of the filler material and of reducing the friction when entering the calibration group.

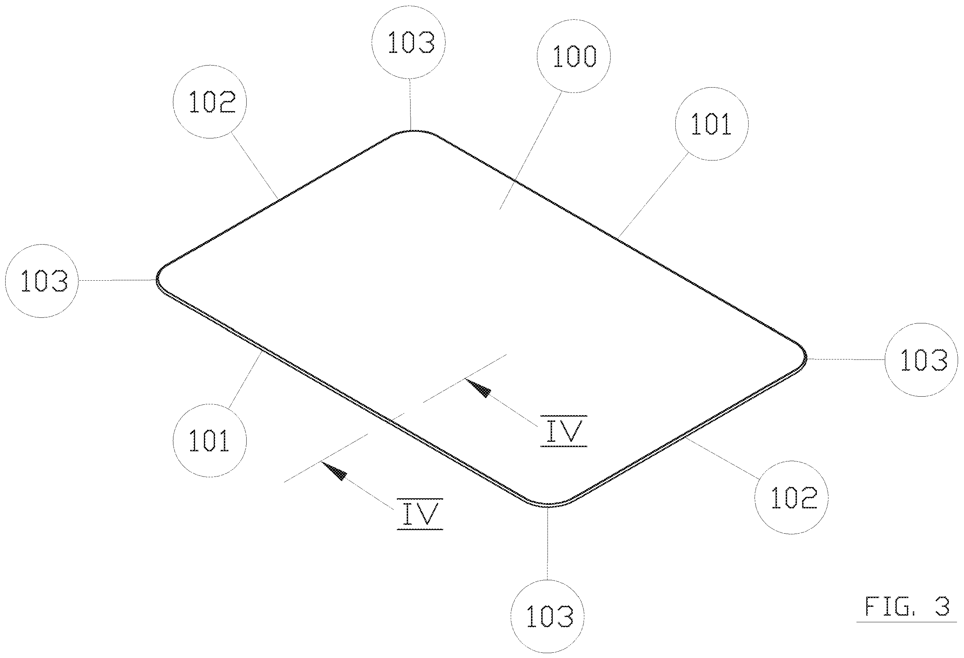

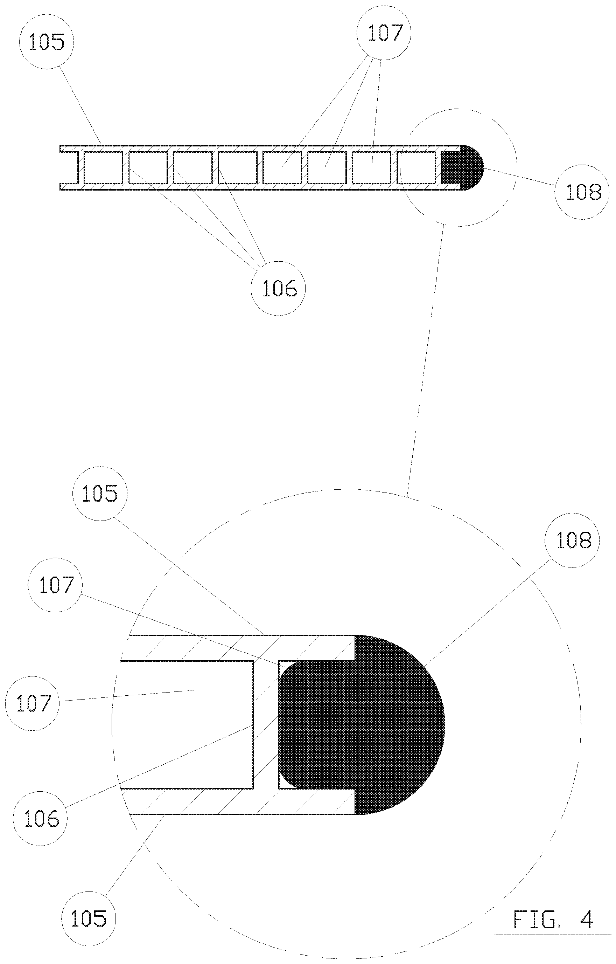

As shown in figure 3, a corrugated panel 100 according to the present invention comprises a border provided with two first sides 101, two second sides 102 and four rounded corners 103. The sealed panel 100 has, in a sectional view as shown in figure 4, two sheets parallel and spaced by corresponding inter-layers 106 so as to form corrugations 107.

Along the outer border of the panel, the corrugations 107 are closed, that is sealed, by means of laying thermoplastic elastomeric material 108. As it can be seen from the enlargement of figure 4, the material 108 fills at least partially the open corrugation and so its contact surface and that of the corrugation are sealed through fusion.

Further, advantageously, the thermoplastic elastomeric material of the bordering, thanks to the above said process, protrudes with respect to the profile of the panel so as to form a sort of protection against shocks. Consequently, the resulting bordering acts not only as a sealing for the corrugations, but also, thanks to the properties of the laid material, it absorbs the shocks in an efficient way.

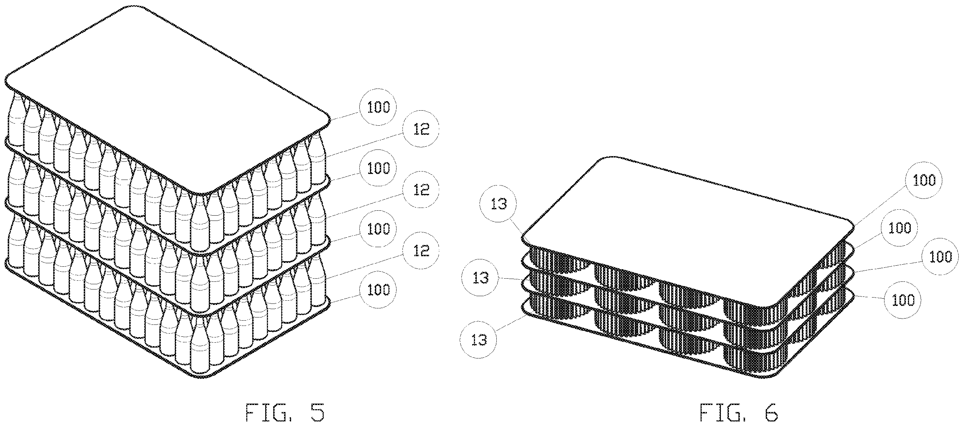

The panel 100, according to the present invention, has a great number of applications. For example, as shown in figures 5 and 6 respectively, it can be used as an interlayer for separating and packaging food containers such as bottles 12, or to separate mechanical items such as gears 13, (shown in figure 6) molded items, etc.

It can further be used for boxes of various shapes and dimensions.

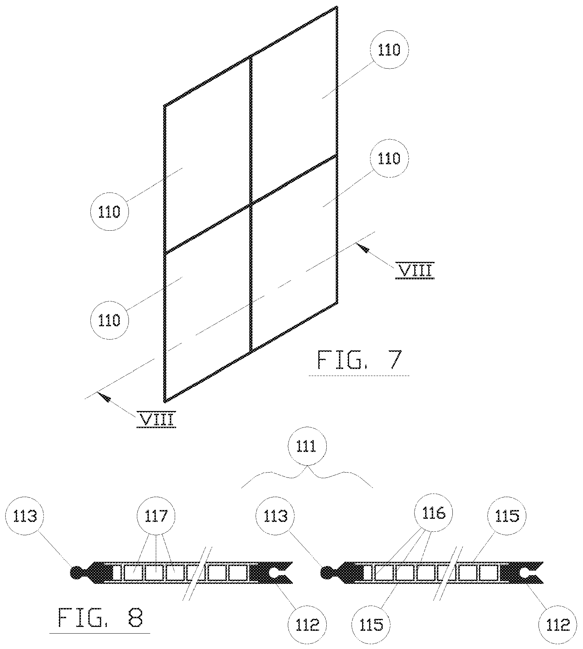

In particular with reference to a variation of embodiment of the invention as shown in figures 7 and 8, panels 110 are basically identical to panel 100 previously described and comprise two parallel sheets 115 separated by interlayers 116 which define the corrugations 117. Advantageously, these panels can be assembled one with the other in order to form structures which can be assembled with single elements according to space requirements. Therefore, actually any requirements can be fulfilled with only one size. It is to note that the assembling can occur by interlocking of the perimetric borders 111 of adjacent panels 110. In fact, such borders 111 are provided with interlocking means. In other words, the borders 111 are provided with at least a first border 112 provided with a groove apt at receiving a corresponding protrusion of a second border 113. Preferably, the interlocking is snap-fitted and with shape coupling.

In order to achieve such particular bordering, it is possible to lay the material with die and immediately work the still malleable material with a calibration tool in order to obtain all the desired shapes. In other words, soon after the laying when the material is still workable, a tool provided with a counter mold gives the desired shape, be it simply rounded by means of rollers, be it groove and tongue joint with suitable counter mold, as shown in figure 9. Alternatively, the die can comprise a mold 16 wherein the thermoplastic polymeric material coming from the extruder 3 is laid. The mold will be already shaped so as to give the border the desired shape. As in the foregoing, such mold 16 will be moved along the borders of the panel 100 so as to achieve the bordering/sealing according to the invention.

From the foregoing, it is apparent that the above said problems have been solved and important advantages have been reached.

In fact, the corrugated panel comprises a leak-proof sealing thanks to the fusion sealing of the contact surface between the perimetric border of the panel and a thermoplastic elastomeric material laid through extrusion and injection. Hence, it is very effectively prevented dirt and liquid from entering that can cause mildew and bacteria growth which is absolutely to be prevented especially when used for packaging foodstuffs.

The resulting border is profiled; therefore it is possible to make particular shapes such as radial connections or interlocking with shape couplings.

The bordering gives a high resistance to shocks just at the portion of panels which is more subject to damages, also thanks, at least, to the partial filling of the open corrugations.

Moreover, even in case of breaking, it is easy to repair them as it is sufficient to inject anew an amount of material to form a new sealing or more simply to heat recalibrate the border (manually as well).

The possibility of shaping or finishing the bordering makes it possible to have also an attractive aspect and avoid ruggedness or possible malformations.

A great number of variations to the process and apparatus of the invention can be carried out by the skilled in the field nevertheless without exiting the protection field as defined in the appended claims.

## Claims

1. Process for bordering a corrugated plastic panel, comprising the following steps in succession:
a) providing a corrugated plastic panel having at least one perimetric open border;
b) heating a thermoplastic elastomeric material till its fusion point;
c) heating at least a portion of said border;
d) extruding said fused thermoplastic elastomeric material;
e) laying said fused material along all the perimetric border of said panel in order to fill at least partially the corrugations of the panel to seal them towards the exterior,
wherein the laying step is carried out with an angle less than 45° with respect to the tangent to the point of the laying and the respective contact surfaces of the corrugations and of the laid material being fused.

2. Process according to claim 1, wherein step b) consists in fusing a thermoplastic elastomeric (TPE) material, preferably selected among thermoplastic elastomers as thermoplastic polyolefin (TPO), thermoplastic styrene (TPS), or polyolefin plastics, polypropylene, high density polyethylene, polycarbonate.

3. Process according to claim 2, wherein said thermoplastic elastomeric material is selected among compound of polyolefin, thermoplastic elastomers of styrene origin preferably selected from TPS, SBS, SEBS, or of polyolefin origin preferably selected from TPE and TPO, whose materials are optionally filled with mineral fillers or glass fibers.

4. Process according to claim 3, wherein said thermoplastic elastomeric material is an open-cell foamed material or closed-cell foamed material.

5. Process according to any one of claims 1 to 4, wherein said step e) of laying of the extruded material is carried out with an inclination of 4°-45°with respect to the tangent to the laying point, and the exit pressure of the material is comprised between 20 bar and 140 bar.

6. Process according any one of claims 1 to 5, comprising a step of blocking of the fluid material flow in correspondence of the laying point.

7. Process according to any one of claims 1 to 6, further comprising a final cooling and shaping step of the border so laid.

8. Corrugated panel (100; 110) comprising a perimetric border (101, 102, 103; 111) having open corrugations (107; 117) externally sealed by means of thermoplastic elastomeric material (108; 118) laid in order to fill at least partially said corrugations and in order to externally protrude, the respective contact surfaces of the corrugations and of the laid material being fused.

## Patentansprüche

1. Verfahren zur Einfassung einer gewellten Kunststofftafel, das die nachstehenden aufeinanderfolgenden Schritte umfasst:
a) Bereitstellen einer gewellten Kunststofftafel mit mindestens einem umlaufenden offenen Rand;
b) Erwärmen eines thermoplastischen Elastomermaterials bis zu seinem Schmelzpunkt,
c) Erwärmen von mindestens einem Abschnitt des Randes
d) Extrudieren des geschmolzenen thermoplastischen Elastomermaterials;
e) Aufbringen (laying) des geschmolzenen Materials entlang des gesamten umlaufenden Randes der Tafel, um die Wellungen der Tafel zumindest teilweise zu füllen und sie nach außen hin abzudichten,
wobei der Aufbringungsschritt mit einem Winkel von kleiner als 45° in Bezug auf die Tangente zum Aufbringungspunkt durchgeführt wird und die jeweiligen Kontaktflächen der Wellungen und des aufgebrachten Materials verschmelzen.

2. Verfahren nach Anspruch 1, wobei Schritt b) darin besteht, ein thermoplastisches Elastomer-(TPE)-Material, das bevorzugt aus thermoplastischen Elastomeren wie thermoplastischem Polyolefin (TPO), thermoplastischem Styrol (TPS) oder Polyolefin-Kunststoffen, Polypropylen, Polyethylen hoher Dichte und Polycarbonat ausgewählt ist, zu schmelzen.

3. Verfahren nach Anspruch 2, wobei das thermoplastische Elastomermaterial aus einer Polyolefin-Verbindung, thermoplastischen Elastomeren mit Styrol-Ursprung, bevorzugt ausgewählt aus TPS, SBS, SEBS, oder mit Polyolefin-Ursprung, bevorzugt ausgewählt aus TPE und TPO, deren Materialien gegebenenfalls mit mineralischen Füllstoffen oder Glasfasern gefüllt sind, ausgewählt ist.

4. Verfahren nach Anspruch 3, wobei das thermoplastische Elastomermaterial ein offenzelliges Schaumstoffmaterial oder ein geschlossenzelliges Schaumstoffmaterial ist.

5. Verfahren nach einem der Ansprüche 1 bis 4, wobei der Schritt e) der Aufbringung des extrudierten Materials mit einer Neigung von 4° - 45° in Bezug auf die Tangente zum Aufbringungspunkt durchgeführt wird, und der Austrittsdruck des Materials zwischen 20 bar und 140 bar umfasst.

6. Verfahren nach einem der Ansprüche 1 bis 5, das einen Schritt der Blockierung des Fluidmaterialflusses in Übereinstimmung mit dem Aufbringungspunkt umfasst.

7. Verfahren nach einem der Ansprüche 1 bis 6, das des Weiteren einen endgültigen Abkühlungs- und Formgebungschritt des so aufgebrachten Randes umfasst.

8. Gewellte Tafel (100; 110), umfassend einen umlaufenden Rand (101, 102, 103, 111) mit offenen Wellungen (107; 117), die außen mittels eines thermoplastischem Elastomermaterials (108; 118) abgedichtet sind, aufgebracht, um die Wellungen zumindest teilweise zu füllen, und um nach außen herauszuragen, wobei die jeweiligen Kontaktflächen der Wellungen und des aufgebrachten Materials verschmolzen sind.

## Revendications

1. Procédé pour border un panneau de plastique corrugué, comprenant les étapes suivantes en succession :
a) fournir un panneau de plastique corrugué ayant au moins un bord périmétrique libre ;
b) chauffer un matériau thermoplastique et élastomérique jusqu'à son point de fusion ;
c) chauffer au moins une portion dudit bord ;
d) extruder ledit matériau thermoplastique et élastomérique fondu ;
e) déposer ledit matériau fondu sur tout le bord périmétrique dudit panneau pour remplir au moins partiellement les alvéoles du panneau pour les sceller vers l'extérieur,
dans lequel l'étape de dépose est effectuée selon un angle inférieur à 45° par rapport à la tangente au point de dépose et dans lequel les surfaces de contact respectives des alvéoles et du matériau déposé sont fusionnées.

2. Procédé selon la revendication 1, dans lequel l'étape b) consiste en la fusion d'un matériau thermoplastique et élastomérique (TPE), préférablement choisi parmi les élastomères thermoplastiques comme le polyoléfine thermoplastique (TPO), le styrène thermoplastique (TPS), ou les plastiques polyoléfines, le polypropylène, le polyéthylène haute densité, le polycarbonate.

3. Procédé selon la revendication 2, dans lequel ledit matériau thermoplastique et élastomérique est choisi parmi un composé de polyoléfine, d'élastomères thermoplastiques d'origine styrène préférablement choisi entre TPS, SBS, SEBS, ou d'origine polyoléfine préférablement choisis entre TPE et TPO, dont les matériaux sont optionnellement remplis avec des charges minérales ou des fibres de verre.

4. Procédé selon la revendication 3, dans lequel ledit matériau thermoplastique et élastomérique est un matériau en mousse à cellules ouvertes ou un matériau en mousse à cellules fermées.

5. Procédé selon l'une des revendications 1 à 4, dans lequel ladite étape e) de dépose du matériau extrudé est effectuée avec une inclinaison de 4°-45° par rapport à la tangente au point de dépose, et dans lequel la pression de sortie du matériau est comprise entre 20 bar et 140 bar.

6. Procédé selon l'une des revendications 1 à 5, comprenant une étape de blocage du matériau fluide en correspondance avec ledit point de dépose.

7. Procédé selon l'une des revendications 1 à 6, comprenant en addition une étape de refroidissement final et de façonnage de la bordure ainsi déposée.

8. Panneau corrugué (100 ; 110) comprenant une bordure périmétrique (101, 102, 130 ; 111) ayant des alvéoles ouvertes (107 ; 117) scellées extérieurement au moyen d'un matériau thermoplastique et élastomérique (108 ; 118) déposé pour remplir au moins partiellement lesdites alvéoles et pour faire saillie extérieurement, les surfaces de contact des alvéoles et du matériau déposé étant fusionnées.
